Europäisches Patentamt

European Patent Office

Office européen des brevets

(11) Numéro de publication: **0 053 544**
**B1**

(12) **FASCICULE DE BREVET EUROPEEN**

(45) Date de publication du fascicule du brevet: **23.10.85**

(21) Numéro de dépôt: **81401841.2**

(22) Date de dépôt: **20.11.81**

(51) Int. Cl.⁴: **F 04 C 15/04,** F 16 H 39/50,
B 60 K 17/10, B 60 T 1/10

(54) Moteur hydraulique et transmission hydrostatique de puissance faisant appel à ce moteur.

(30) Priorité: **28.11.80 FR 8025332**

(43) Date de publication de la demande:
**09.06.82 Bulletin 82/23**

(45) Mention de la délivrance du brevet:
**23.10.85 Bulletin 85/43**

(84) Etats contractants désignés:
**AT BE CH DE FR GB IT LI LU NL SE**

(56) Documents cités:
**FR-A-1 130 841**
**US-A-2 238 062**
**US-A-3 153 984**
**US-A-3 604 823**

(73) Titulaire: **COMPAGNIE DE CONSTRUCTION MECANIQUE SULZER Société anonyme dite:**
**51, boulevard Brune**
**Cedex 59 F-75300 Paris Brune (FR)**

(72) Inventeur: **Mallen-Herrero, José**
**29 Boulevard des Batignolles**
**F-75008 Paris (FR)**
Inventeur: **Leroy, Daniel**
**8 Rue des Fontaines Agnès**
**F-78520 Limay (FR)**

(74) Mandataire: **Rinuy, Santarelli**
**14, avenue de la Grande Armée**
**F-75017 Paris (FR)**

Courier Press, Leamington Spa, England.

## Description

La présente invention se rapporte à un moteur hydraulique à palettes à coulissement axial contre une surface continue de fond statorique à évidements, lequel moteur est susceptible d'être incorporé à une transmission hydrostatique de puissance appliquée plus particulièrement, mais non exclusivement, à du matériel roulant, souterrain ou aérien, sur rails comme sur route.

Dans la demande de brevet européen 80401537.8 (EP—A—0028197) déposée le 29 octobre 1980, la Demanderesse a décrit un dispositif dans lequel les palettes coulissantes, à coulissement axial, sont considérées par paires, par rapport à un axe de symétrie, dans des logements du rotor, les palettes de chaque paire étant placées dans l'alignement l'une de l'autre, de manière que les palettes viennent, chacune, en application contre une surface continue de fond statorique, différente.

Les surfaces continues de fond statoriques peuvent présenter, en un nombre variable, des déformations ou évidements à zones rectilignes appropriées au fonctionnement recherché du dispositif, ce nombre étant identique sur chaque surface statorique, les évidements étant opposés l'un à l'autre.

Suivant une forme de réalisation de la demande précitée, les palettes coulissantes à coulissement axial sont placées par paires dans des logement rotoriques, de part et d'autre d'une pièce statorique médiane, les évidements étant opposés dos à dos, de part et d'autre de ladite pièce statorique médiane et réalisés sur cette pièce, les palettes se rapprochant l'une de l'autre pour être appliquées sur les surfaces continues de fond, à évidements, de ladite pièce statorique médiane.

Suivant encore une autre forme de réalisation de la demande précitée, une pièce statorique médiane, avec des surfaces de fond prévues de part et d'autre d'un axe de symétrie, fait corps avec une portion d'arbre fixe, le rotor étant alors monté en forme de cage autour du stator.

Dans la demande de brevet européen No. 81400818.1 (EP—A—0065607) déposée le 22 mai 1981, la Demanderesse a décrit un dispositif hydraulique rotatif à stator et rotor coaxiaux et à palettes coulissant axialement dans le rotor, le stator comportant au moins une surface de fond présentant, en un nombre variable, des déformations à zones rectilignes appropriées au fonctionnement, ou evidements, lesdites palettes venant suivre ladite surface de fond, caractérisé en ce que lesdits évidements sont réalisés sur des éléments mobiles du stator, de sorte que la profondeur desdits évidements peut être rendue variable, d'où un débit variable pour le dispositif.

On connaît par le brevet FR—A—1.130.841 une pompe hydraulique à débit réglable à palettes mobiles axialement mais dont la veine hydraulique reste à largeur maximum constante en dehors d'un plafond mobile venant en saillie pour régler le volume de la chambre de la pompe et entraînant de ce fait des pertes importantes par frottements hydrauliques. La commande des déplacements du plafond mobile est assistée en envoyant derrière ledit plafond mobile une pression qui n'est pas constante mais fonction de la résistance opposée par la pression qui règne dans la chambre de pompe.

Cette pompe ou dispositif peut être utilisé dans une transmission en tant que pompe pour débiter dans un moteur. Il peut également être utilisé comme moteur hydraulique mais, dans ce cas, il n'a pas besoin d'un "plafond mobile".

La présente invention vise un moteur hydraulique comprenant des palettes à coulissement axial dans des logements pratiqués dans un rotor, contre une surface de fond de stator, des éléments de stator mobiles en retrait définissant chacun un évidement plus ou moins profond selon la position de l'élément dans son logement et au plus en arasement avec des plages fixes de ladite surface de fond de stator, une pression constante de pilotage étant envoyée derrière lesdits éléments mobiles statoriques, le moteur hydraulique ainsi réalisé constituant un moteur à cylindrée variable et autorégulé, la cylindrée du moteur étant donnée par la profondeur des évidements résultant de l'opposition de deux forces de part et d'autre de chaque élément mobile, une force (FP) provenant de ladite pression constante de pilotage et une force (FA) provenant d'une pression active provoquée par le couple résistant, la force (FP) ayant pour effet de réduire la cylindrée du moteur alors que la force (FA) a pour effet d'augmenter cette cylindrée, de sorte que le moteur hydraulique fonctionne, à pression constante, par variation de cylindrée.

Les éléments mobiles peuvent montrer chacun un plateau central, chaque surface de fond statorique comportant des plages fixes entre des plateaux d'éléments mobiles, lesdites plages et lesdits plateaux étant plans, d'où une phase possible de fonctionnement en roue libre au cours de laquelle ces plages fixes et ces plateaux sont en arasement les une par rapport aux autres.

L'invention vise également une transmission hydrostatique de puissance incorporant au moins un moteur hydraulique selon l'invention.

Cette transmission comprend, outre ledit moteur solidaire d'un organe entraîne, une pompe principale entraînée, à régime constant, par un émetteur de puissance, et fournissant un débit variable commandé haute pression nécessaire à la rotation du moteur hydraulique, laquelle transmission comprend également une source de pression constante de pilotage, cette pression étant envoyée derrière les éléments mobiles statoriques, de sorte que le débit maximal de ladite pompe, à pression constante au niveau de la puissance installée, étant atteint, le moteur hydraulique continue sa montée en vitesse à puissance, débit et pression constants, par réduction automatique de sa cylindrée et de son couple.

La transmission peut équiper un véhicule et comprend des distributeurs de sens de marche et autant de moteurs hydrauliques qu'il existe de roues sur le véhicule considéré.

La transmission est à circuit fermé avec disposition de renouvellement côté basse pression, le sens du circuit hydraulique étant toujours dans le même sens en propulsion ou en retenue, la haute pression, en propulsion, se situant entre la pompe principale et les moteurs hydrauliques et cette haute pression étant annulée en roue libre.

En retenue ou freinage, la haute pression se situe entre les moteurs hydrauliques fonctionnant en émetteurs et la pompe principale fonctionnant en réceptrice.

Le débit de la pompe principale est commandé en utilisant la pression de gavage d'une pompe auxiliaire pour faire varier sa cylindrée.

La transmission comprend un diviseur de débit divisant le débit haute pression de la pompe en autant de débits, de valeur identique, qu'il y de roues et donc de moteurs.

La source de pression de pilotage est puisée sur la haute pression amenée à la pression de pilotage.

L'invention apporte de nombreux avantages et notamment les suivants:

— la demande de puissance en propulsion est directement définie par la roue, proportionnellement au couple et à la vitesse de rotation désirés.

La consommation d'énergie est très faible à basse vitesse et dans les périodes de démarrage.

L'émetteur de puissance est sollicité à régime constant, sans conditions particulières de régulation.

La transmission peut freiner la charge, avec ou sans récupération d'énergie, même avec une rupture de courant électrique.

La transmission se prête à une disposition de roues indépendantes, tout en annulant les effets de patinage et d'enrayage.

La régulation de puisance est réglée par le moteur hydraulique.

L'émetteur de puissance entraînant la pompe, tourne à son propre régime indépendant de celui de la roue.

Les variations de vitesse de l'émetteur de puissance sont automatiquement absorbées par le moteur hydraulique sans répercussion sur la rotation de la roue.

Dans les courbes du parcours suivi par le véhicule équipé selon l'invention, chaque moteur hydraulique modifie sa cylindrée pour répondre à la vitesse souhaitée, en fonction d'un même débit desservi à chacun.

La pompe et les moteurs hydrauliques sont parfaitement équilibrés, produisant directement un couple ou un débit, sans transformation de mouvements.

La poussée hydraulique n'est pas supportée par une pièce mécanique en mouvement du type: butée de roulement, cardan, bielle, galet, etc.

Les jeux d'usure sont automatiquement rattrapés et préservent ainsi le rendement volumétrique.

La solution de l'invention demande un débit minimal, ce qui autorise des vitesses de fluide de l'ordre par exemple de 3 m/s dans des conduits de faible section et des composants hydrauliques de petites dimensions.

En plus du fonctionnment à faible pression, donc à faible compression de fluide, la pompe et les moteurs hydrauliques, de par leur conception, sont très peu pulsatoires.

D'autres caractéristiques et avantages de la présente invention ressortiront de la description qui va suivre faite en regard des dessins annexés, sur lesquels:

— la figure 1 est une vue développée et en coupe d'une partie d'un moteur hydraulique conforme à l'invention;
— la figure 2 est un schéma représentant une unité de principe de transmission comportant un moteur hydraulique conforme à l'invention;
— la figure 3 représente deux diagrammes associés; un diagramme couple moteur-vitesse moteur et un diagramme puissance-vitesse moteur;
— la figure 4 est une vue en perspective, en coupe partielle, d'une forme de réalisation d'un moteur hydraulique conforme à l'invention;
— la figure 5 représente un moteur hydraulique selon l'invention associé avec l'essieu fixe d'une roue, par son stator, et avec le moyeu de cette roue, par son rotor extérieur;
— la figure 6 est un schéma représentatif de fonctionnement d'un transmission incorporant des moteurs hydrauliques selon l'invention, selon une phase de propulsion avec possibilité de roue libre, le schéma étant accompagné d'un code d'écoulement du fluide;
— la figure 7 est un schéma identique à celui de la figure 6 avec son code d'écoulement, selon une phase de fonctionnement correspondant au démarrage avec antipatinage;
— la figure 8 est un schéma identique à celui de la figure 6 avec son code d'écoulement, selon une phase de fonctionnement correspondant au freinage avec récupération d'énergie;
— la figure 9 est un schéma identique à celui de la figure 6 avec son code d'écoulement, selon une phase de fonctionnement correspondant au freinage sans récupération d'énergie;
— la figure 10 est un schéma identique à celui de la figure 6 avec son code d'écoulement, selon une phase de fonctionnement correspondant au freinage avec groupe de puissance arrête.
— la figure 11 représente une variante d'une partie du schéma de la transmission des figures 6 à 10.

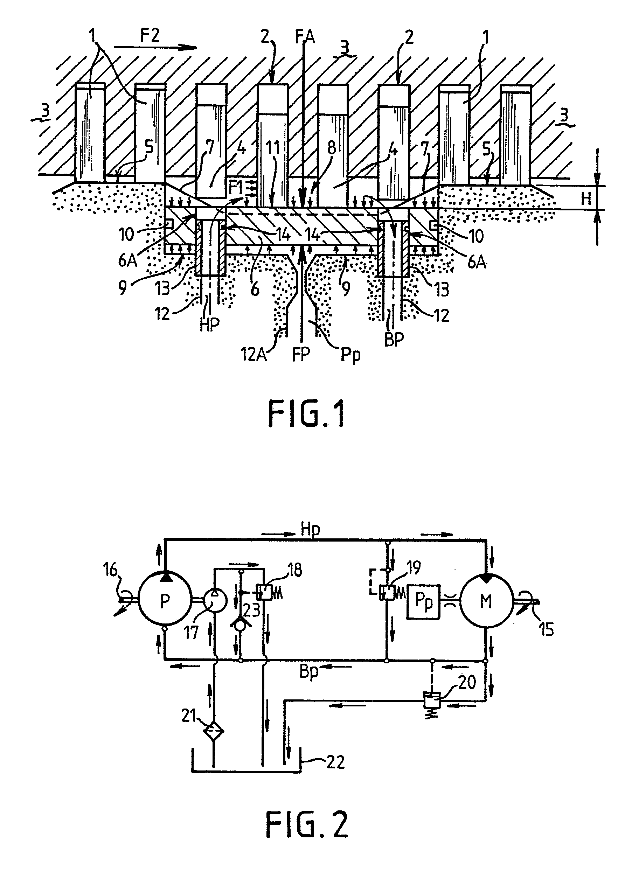

Dans la forme de réalisation représentée à la figure 1 d'un moteur hydraulique rentrant dans le cadre de l'invention, des palettes (1) à coulissement axial dans des logements (2) pratiqués dans un rotor (3) viennent porter, par au moins une arête de leur bec (4) faisant saillie, sur une surface statorique de fond, à déformations ou évidements non permanents. Cette surface continue statorique offre la particularité d'être composite, en ce sens qu'elle comprend, à la fois, des plages fixes (5) et des portions ou éléments mobiles (6) pouvant réaliser, en cours de fonctionnement, des évidements (8) en se déplaçant dans des logements (9) pratiqués dans le stator. Des rampes fixes (7) font la liaison entre les plages fixes (5) et les logements statoriques (9). Des étanchéités (10) sont prévues entre chaque élément mobile (6) et le logement statorique correspondant.

Dans la forme de réalisation représentée, chaque élément mobile (6) montre un plateau central (11) formant le fond de l'évidement quand celui-ci se réalise et trouvant place dans le logement statorique (9) entre deux paires de rampes statoriques fixes (7).

Les deux rampes de chaque paire font fonctionnellement le relais avec le plateau central, de manière à assurer un contact constant de tout ou partie du bec avant de la palette (1) considérée (ou du moins de tout ou partie d'une arête de ce bec) avec le stator, au passage de la palette (1), depuis la plage fixe statorique (5), pour gagner le plateau central (11). Le contact constant se fait tantôt avec une arête, tantôt avec l'autre arête, avec un passage à plat intermédiaire, où chaque palette montre, à titre d'exemple, un bec avant quadrangulaire.

Des circuits haute pression (HP) et basse pression (BP) traversent le stator par des canaux (12) prolongés, chacun, dans les logements (9) par des tubes plongeurs (13) le long desquels coulissent les éléments mobiles (6), des alésages (6A) étant pratiqués dans ces éléments mobiles, à cet effet. Des joints d'étanchéite (14) sont disposes sur les tubes plongeurs (13) entre les alésages (6A) et ces tubes. Cette disposition est prévue afin que chaque évidement (8) puisse être en communication avec un circuit (HP) et un circuit (BP). Une pression de pilotage est, conformément à l'invention, admise par un canal (12A) derrière chaque élément mobile (6) et les tubes plongeurs (13) isolent les circuits (HP) et (BP) de cette pression de pilotage (Pp). L'action du fluide sur les palettes est indiquée par les flèches F1 et la puissance motrice rotorique par la flèche F2.

Le moteur hydraulique ainsi réalisé peut constituer un moteur à cylindrée (q) variable et auto-régulé. La cylindrée du moteur est donnée par la profondeur (H) des évidements (8) résultant de l'opposition de deux forces de part et d'autre de chaque élément mobile (6); une force (FP) provenant de la pression de pilotage (Pp) constante et une force (FA) prevenant d'une pression active (PA) provoquée par le couple résistant m. La force (FP) a pour effet de réduire la cylindrée (q) du moteur alors que la force (FA) a pour effet d'augmenter cette cylindrée. Cette conception oblige le moteur hydraulique à fonctionner, à pression constante, par variation de cylindrée.

Le moteur hydraulique de l'invention est susceptible d'être incorporé à une transmission hydrostatique de puissance plus particulièrement applicable mais non exclusivement à du matériel roulant.

Cette transmission comporte, en principe, selon l'invention, outre le moteur (M) solidaire d'un organe entraîne (15) et une pompe (P) entraînée par un émetteur de puissance (16) (un moteur électrique par exemple) une source de pression constante de pilotage (Pp), cette pression étant envoyée derrière les éléments mobiles statoriques (6).

La pompe entraînée par l'émetteur de puissance fournit le débit haute pression (HP) nécessaire à la rotation du moteur hydraulique, la basse pression (BP) sortant du moteur regagnant la pompe. Cette unité de principe de transmission comporte également une pompe auxiliaire à débit fixe de gavage et de renouvellement (17) un limiteur de pression de gavage (18), un limiteur de haute pression (19) et un limiteur de pression de purge et de renouvellement (20). Cette unité est complété par un filtre d'aspiration (21) depuis un réservoir (22) et par un clapet de non retour (23) le renouvellement de l'huile se faisant par ce clapet à la suite d'un effet différentiel de pression: pression de gavage>BP>pression de purge.

Le moteur hydraulique (M) règle lui-même sa cylindrée (q) en fonction du couple résistant (m) et de la pression constante de fonctionnement.

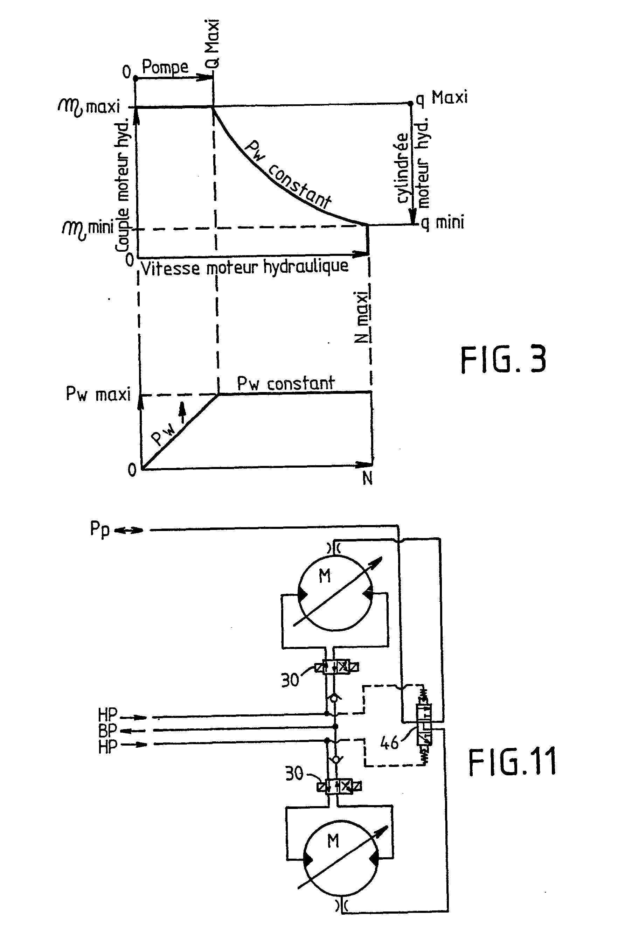

La pompe (P) à débit variable commandé, tournant à régime constant, atteint son débit maximal (Q maxi) à pression constante au niveau de la puissance installée (figure 3).

Le débit maximal de la pompe étant atteint, le moteur hydraulique continue sa montée en vitesse (N) à puissance (PW), débit et pression constants, par réduction automatique de cylindrée (q) et de couple (M) (figure 3).

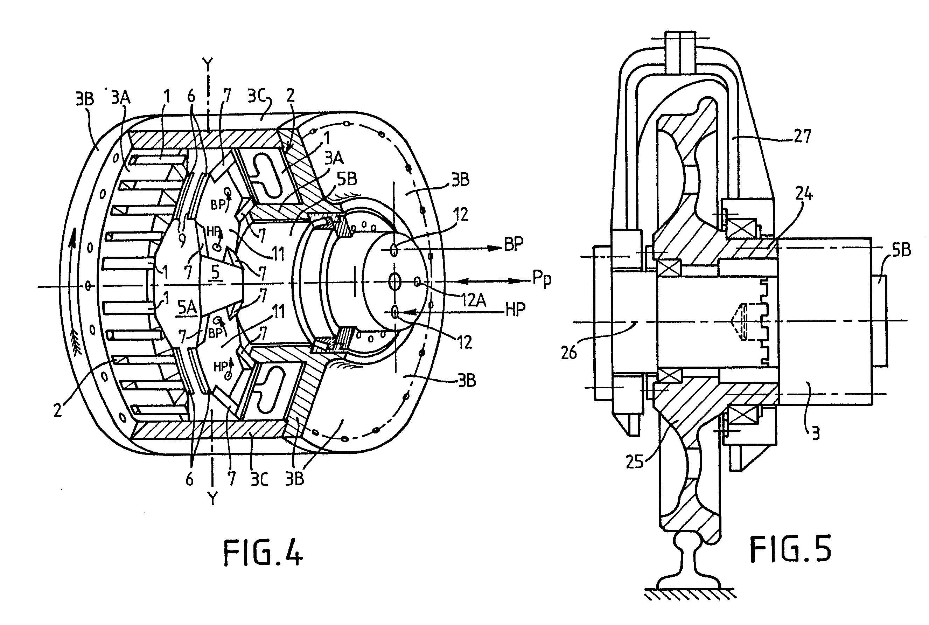

Dans la forme de réalisation représentée à la figure 4, une pièce statorique médiane (5A) est prévue avec des surfaces de fond (5, 11) de part et d'autre d'un plan de symétrie (Y—Y). Cette pièce statorique médiane fait corps avec une portion d'arbre fixe (5B). Le rotor est monté en forme de cage autour du stator et comprend deux parties centrales (3A) de part et d'autre de la pièce statorique médiane (5A) dans laquelle sont pratiqués les logements (9), et comprend également ment des flasques latéraux (3B) et une frette (3C) formant entretoise entre ces flasques.

Il doit être remarqué que dans la forme de réalisation de la figure 1 comme dans la forme de réalisation de la figure 4, les plages fixes (5) de chaque surface de fond statorique sont planes au même titre que les plateaux (11) des éléments mobiles (6) de cette surface de fond, d'ou une phase possible de fonctionnement en roue libre (comme expliqué plus loin) au cours de laquelle ces plages fixes (5) et ces plateaux (11) sont en arasement les uns par rapport aux autres, les évidements (8) n'étant plus alors réalisés, d'ou l'expression employée plus haut d'évidements (8) non permanents.

Dans la forme de réalisation représentée à figure 5, le rotor extérieur désigné dans son ensemble par la référence (3) du moteur hydraulique est avantageusement accouplé, à l'aide d'un entraînement flottant (24) à une roue (25) de matériel roulant, en particulier de matériel ferroviaire.

L'essieu fixe (26) de la roue auquel l'arbre fixe (5B) du moteur est solidarisé est supporté par un support (27). L'arbre (5B) du moteur est percé par les canaux (12) de pressions (HP) et (BP) et par le canal (12A) de pression de pilotage (Pp).

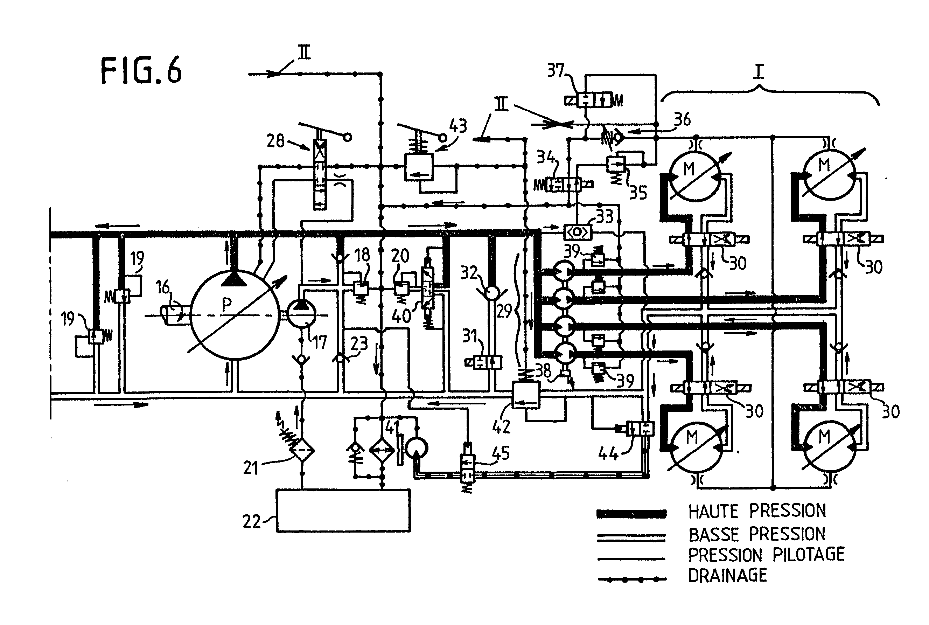

Une transmission hydraulique mobile va être décrite ci-après dans plusieurs phases de fonctionnement en regard des figures 6 à 10, laquelle transmission reprend le principe de transmission de la figure 2 à circuit fermé avec disposition de renouvellement côté basse pression. Le sens du circuit hydraulique est toujours dans le même sens en propulsion ou en retenue. Le seule inversion se situe entre des distributeurs de sens de marche (30) et autant de moteurs hydrauliques (M) qu'il existe de roues (25) sur le véhicule considéré.

En propulsion, la haute pression (HP) se situe entre la pompe principale (P) et les moteurs hydrauliques (M) afin de vaincre le couple de traction et en roue libre, la haute pression est annulée.

La haute pression en retenue ou freinage se situe entre les moteurs hydrauliques fonctionnant en émetteurs et la pompe principale fonctionnant en réceptrice, afin de maintenir le couple de freinage.

En propulsion (figure 6), la pompe principale (P) à débit variable à un seul sens de flux est entraînée par l'émetteur de puissance (16). Son débit est commandé depuis un poste de commande par un distributeur (28) en utilisant la pression de gavage pour faire varier sa cylindrée.

Le débit de la pompe est refoulé en haute pression par des conduits vers un premier bogie I et vers un second bogie II de véhicule considéré jusqu'à un diviseur de débit (29) divisant le débit en autant de débits de valeur identique qu'il y a de roues par bogie et donc de moteurs.

Chaque débit est alors canalisé vers un des distributeurs de sens de marche (30) afin d'alimenter un des moteurs hydrauliques (M) accouplé à une roue de bogie et lui donner, suivant le sens d'alimentation, son sens de rotation.

En sortie des moteurs hydrauliques (M) le fluide en basse pression est canalisé, en conduit centralisé, vers l'aspiration de la pompe principale (P).

La position des distributeurs de sense de marche (30) est commandée, à l'arrêt, électriquement, depuis le poste de commande.

La phase de roue libre hydraulique envisagée conformément à l'invention (figure 6) a pour but de rendre impossible tout effet de retenue par inversion de la haute pression et de la basse pression pendant la période de propulsion. A cet effet, un distributeur (31) d'annulation de roue libre est placé en position ouverte et un clapet (32) de roue libre est maintenu fermé par la haute pression pendant la propulsion. Si la pression s'inverse, le clapet (32) s'ouvre, annulant la haute pression et les moteurs hydrauliques (M) tournent alors sur eux-mêmes.

Le principe de fonctionnement des moteurs hydrauliques à cylindrée variable autorégulés selon l'invention nécessite trois pressions constantes et proportionnelles:

— la haute pression (HP);
— la basse pression (BP); et
— la pression de pilotage (Pp).

La haute pression passe à travers un sélecteur de circuit (33) et est dirigée sur un distributeur (34) de commande de pilotage des moteurs hydrauliques, lequel distributeur est placé en position ouverte (aller et retour). La haute pression sur laquelle on puise est amenée à la pression de pilotage en passant à travers un réducteur de pression (35) et est maintenue en pression de pilotage par un clapet taré ou limiteur de pression (36). Un distributeur (37) d'annulation de pression de pilotage est placé en position fermée.

La mise en position de pilotage des distributeurs (34) et (37) est faite par rapport de courant électrique fourni par un dynamo (38) entraînée par le diviseur de débi (29) tournant à un régime (N1).

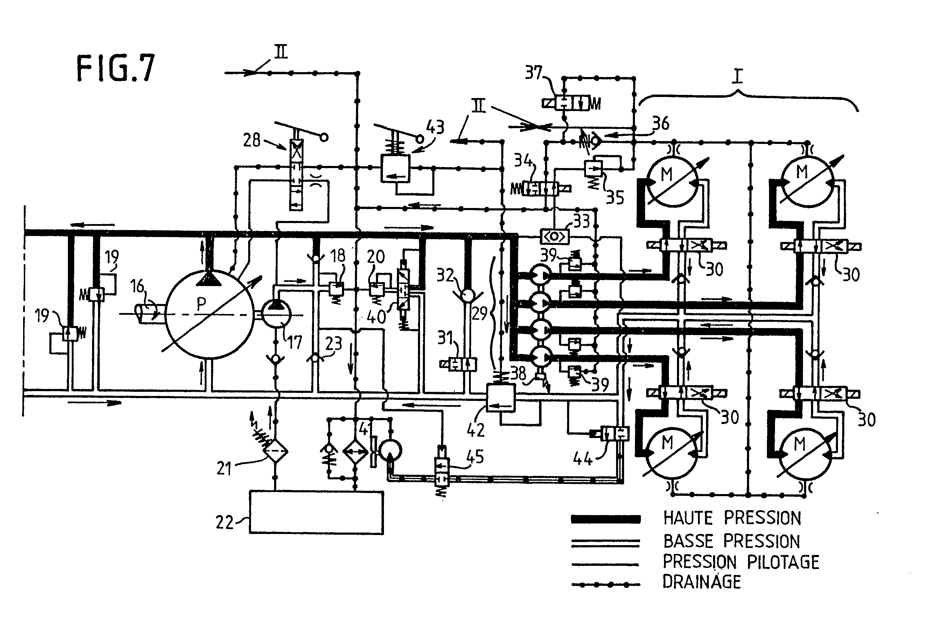

Avant d'atteindre ce régime (N1), la transmission est en position d'anti-patinage (figure 7). Le distributeur de commande de pilotage (34) est en position (aller fermée—retour ouverte) annulant ainsi le passage de la haute pression. Le distributeur d'annulation de pression de pilotage (37) est en position ouverte supprimant ainsi la pression de pilotage. Les moteurs hydrauliques (M) sont alors en cylindrée fixe maximale avec obligation de tourner tous à la même vitesse, recevant chacun le même débit provenant du diviseur (29).

Dans les périodes de freinage, le diviseur de débit (29) annule les effets d'enrayage, en obligeant les moteurs hydrauliques à tourner; tous les moteurs recevant chacun un même débit.

La sécurité haute pression (HP) est garantie par deux limiteurs de pression (19) ayant pour effet de mettre la pompe principale (P) en circuit fermé. Le diviseur de débit (29) est également muni de limiteurs de pression (39) afin de pallier les reports de puissance des roues entre elles.

Le renouvellement d'huile se fait en basse pression par un sélecteur de circuit (40) piloté hydrauliquement par la haute pression donnant le passage à la basse pression. En sortie de ce sélecteur (40), le fluide passe à travers le limiteur de pression de renouvellement et de purge (20) afin de maintenir la basse pression. Le fluide est ensuite canalisé vers le réservoir (22) à travers un dispositif de refroidissement (41) par exemple aéroréfrigérant.

Le volume d'huile ainsi retiré du circuit est remplacé par un même volume refroidi provenant du réservoir (22) aspiré à travers le filtre (21) par la pompe de gavage (17) entraînée par l'émetteur de puissance (16), et refoulant dans le circuit basse pression à travers un dispositif sélectif de clapets. La pression de gavage est obtenue par le limiteur de pression (18) (pression de gavage>base pression>pression de renouvellement).

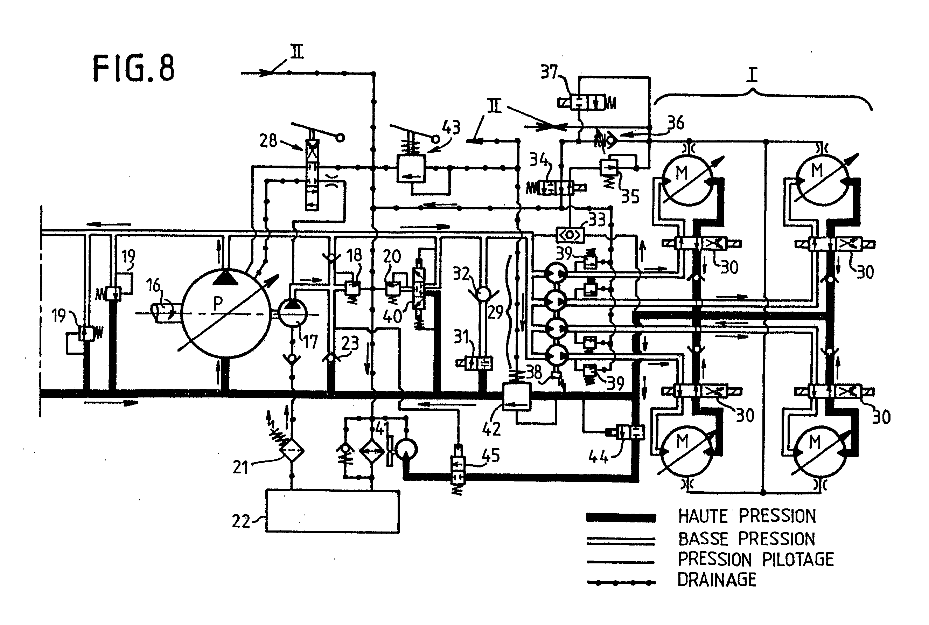

En phase de freinage avec récupération d'énergie (figure 8), les moteurs (M) restent en liaison hydraulique avec la pompe principale (P). Le clapet de roue libre (32) est neutralisé par la mise en position fermée du distributeur (31) d'annulation de roue libre.

Les moteurs hydrauliques (M) entraînés par l'inertie du véhicule refoulent le fluide vers la pompe principale (P) obligeant celle-ci à fonctionner en récepteur. Par baisse de cylindrée, commandée, de la pompe principale (P) on obtient la montée en pression du fluide de refoulement occasionnant un couple de retenue aux moteurs hydrauliques (M) et un entraînement de la pompe principale (P) et de l'émetteur de puissance (16) fonctionnant alors en générateur de courant électrique.

Le freinage étant réalisé, le courant électrique peut être renvoyé au réseau ou autre source de courant électrique.

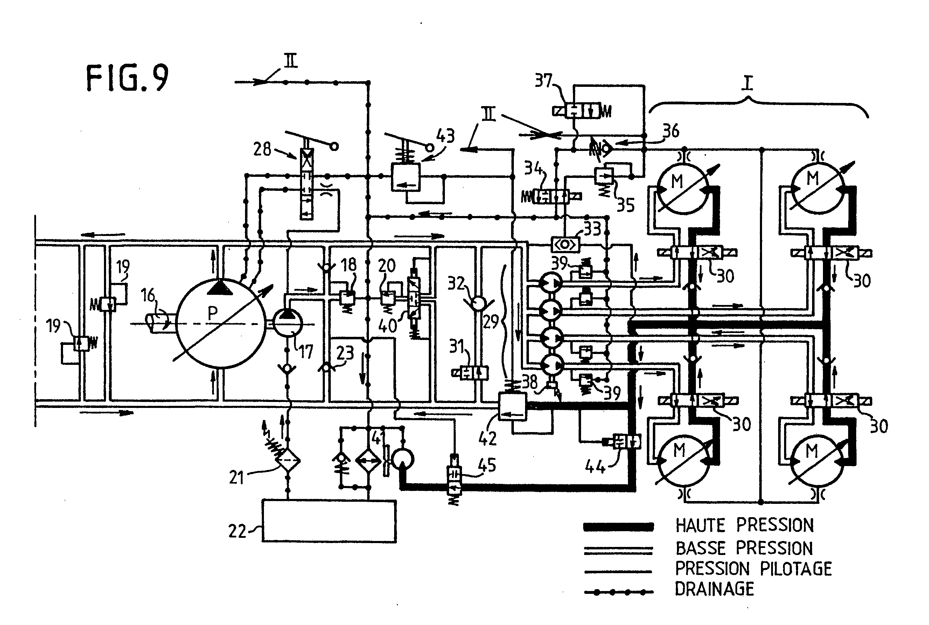

En phase de freinage sans récupération d'énergie (figure 9), la montée en pression du fluide refoulé par les moteurs hydrauliques (M) est provoquée par un doseur de pression de frein (42) piloté hydrauliquement par un limiteur de pression de frein (43) commandé du poste de manoeuvre.

Le distributeur d'annulation de roue libre (31) est en position ouverte et le clapet de roue libre (32) permet le retour du fluide directement aux moteurs hydrauliques (M) en isolant la pompe principale (P).

En phase de freinage mixte, le dispositif étant en position freinage avec récupération d'énergie, il est possible de retenir par le doseur de freinage (42) une partie de la puissance de freinage, afin de moduler la récupération d'énergie à la pompe principale (P).

Le refroidissement du fluide se fait uniquement pendant les périodes de freinage. La montée en pression de refoulement des moteurs hydrauliques (M) entraîne la mise en position ouverte d'un distributeur de commande de refroidissement (44). Un distributeur de commande d'annulation de refroidissement (45) est maintenu ouverte par la pression de gavage. Une partie du fluide de refoulement est alors déviée vers le moteur hydraulique du dispositif de refroidissement (41) entraînant le ventilateur de ce dispositif.

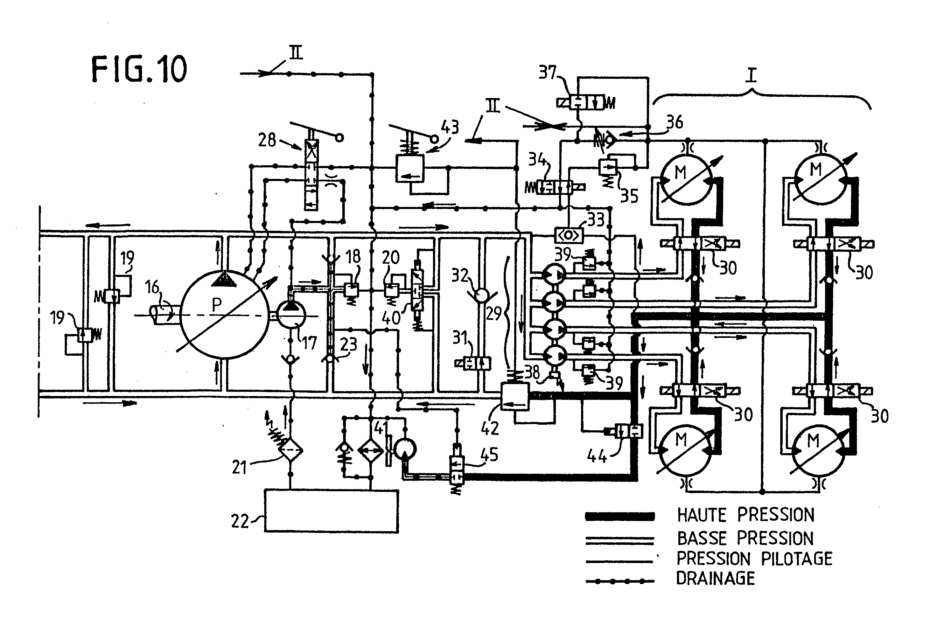

En phase de freinage, le groupe de puissance étant arrête (par suite par exemple d'une rupture de courant) (figure 10), les conditions sont les même que pour le freinage sans récupération d'énergie, sauf que le distributeur d'annulation de refroidissement (45) est en position fermée par manque de pression de gavage, afin d'éviter de vider le circuit hydraulique. Le circuit hydraulique n'est pas réalimenté.

Par manque d'adhérence ou par délestage, le couple résistant applique à une roue peut chuter brutalement. Pour un débit donné et constant, cette chute de couple entraîne automatiquement une baisse de la pression HP du moteur hydraulique.

Le déplacement des éléments mobiles (6) étant limité en vitesse pour créer une variation progressive de cylindrée, du fait de l'invention, une chute brutale du couple résistant entraîne une vitesse de déplacement des éléments mobiles (6) supérieure à cell initialement prévue. Du fait de ce décalage de vitesses, la pression HP ne peut plus être maintenue et un Δ P se crée entre les deux pression (HP) des deux moteurs hydrauliques d'un même essieu.

Pour un même essieu, la pression de pilotage (Pp) règlant la cylindrée des moteurs hydrauliques, passe à travers un distributeur sélectif (46) (voir figure 11) piloté par les pressions (HP). Au-dela d'un Δ P des pressions (HP) nécessaire au passage en courbe, ce distributeur coupe l'alimentation de pilotage du moteur hydraulique en chute de couple, évitant ainsi un emballement de celui-ci par chute de cylindrée.

Le distributeur sélectif retrouve son équilibre au retour du couple résistant de la roue, redonnant à ce moteur hydraulique sa pression de pilotage.

**Revendications**

1. Moteur hyraulique comprenant des palettes (1) à coulissement axial dans des logements (2) pratiqués dans un rotor (3), contre une surface de fond de stator, des éléments des stator mobiles en retrait (6) définissant chacun un évidement (8) plus ou moins profond selon la position de l'élément dans son logement (9) et au plus en arasement avec des plages fixes (5) de ladite surface de fond de stator, une pression constante de pilotage (Pp) étant envoyée derrière lesdits éléments mobiles (6) le moteur hydraulique ainsi réalisé constituant un moteur à cylindrée variable et auto-régulé, la cylindrée du moteur étant donnée par la profondeur des évidements résultant de l'opposition de deux forces de part et d'autre de chaque élément mobile (6), une force (FP) provenant de ladite pression constante de pilotage (Pp) et une force (FA) provenant d'une pression active (PA) provoquée par le couple résistant, la force (FP) ayant pour effet de réduire la cylindrée (q) du moteur alors que la force (FA) a pour effet d'augmenter cette cylindrée, de sorte que le moteur hydraulique fonctionne, à pression constante, par variation de cylindrée.

2. Moteur hydraulique selon la revendication 1, caractérisé en ce que des circuits haute pression (HP) et basse pression (BP) traversent le stator par des canaux (12) prolongés chacun dans les logements statoriques (9) recevant les éléments mobiles (6), par des tubes plongeurs (13) le long desquels coulissent lesdits éléments mobiles (6), la pression de pilotage étant admise par un canal (12A) derrière chaque élément mobile (6), les tubes plongeurs (13) isolant les circuits (HP) et (BP) de cette pression de pilotage (Pp).

3. Moteur hydraulique selon l'une quelconque des revendications 1 et 2, caractérisé en ce que le moteur hydraulique est du type comprenant une pièce statorique mediane (5A) avec des surfaces de fone (5, 11) de part et d'autre d'un plan de symétrie Y—Y, cette pièce statorique médiane faisant corps avec une portion d'arbre fixe (5B) le rotor étant monté en forme de cage autour du stator.

4. Moteur hydraulique selon l'une quelconque des revendications 1 à 3, caractérisé en ce que les éléments mobiles (6) montrent chacun un plateau central (11) entre des plages fixes (5), lesdites plages et lesdits plateaux étant plans, d'où une phase possible de fonctionnement en roue libre au cours de laquelle ces plages fixes (5) et ces plateaux (11) sont en arasement les uns par rapport aux autres.

5. Moteur hydraulique selon l'une quelconque des revendications 3 et 4, caractérisé en ce que le rotor extérieur (3) du moteur hydraulique est accouplé à une roue (35) de matériel roulant, l'essieu fixe (26) de la roue étant solidaire de l'arbre fixe (5B) du moteur, lequel est percé par les canaux (12) de pressions (HP) et (BP) et par le canal (12A) de pression de pilotage (Pp).

6. Utilisation du moteur hydraulique selon l'une quelconque des revendications 1 à 5 dans une transmission hydrostatique de puissance caractérisée en ce qu'elle comprend outre ledit moteur (M) solidaire d'un organe entraîne (15), une pompe (P), entraînée à régime constant par un émetteur de puissance (16), et fournissant un débit variable commandé haute pression (HP) nécessaire à la rotation du moteur hydraulique, laquelle transmission comprend également une source de pression constante de pilotage (Pp), cette presion (Pp) étant envoyée derrière les éléments mobiles statoriques (6), de sorte que le débit maximal (Q maxi) de ladite pompe, à pression constante au niveau de la puissance installée, étant atteint le moteur hydraulique continue sa montée en vitesse (N) à puissance (Pw), débit et pression constants, par réduction automatique de sa cylindrée (q) et de son couple (*m*).

7. Utilisation selon la revendication 6, caractérisée en ce qu'elle équipe un véhicule et en ce qu'elle comprend des distributeurs de sens de marche (30) et autant de moteurs hydrauliques (M) qu'il existe de roues (25) sur le véhicule considéré.

8. Utilisation selon la revendication 6, caractérisée en ce qu'elle est à circuit fermé avec dispositif de renouvellement côté basse pression, le sens du circuit hydraulique étant toujours dans le même sens en propulsion ou en retenue, la haute pression (HP) en propulsion se situant entre la pompe principale (P) et les moteurs hydrauliques (M) et cette haute pression (HP) étant annulée en roue libre.

9. Utilisation selon l'une quelconque des revendications 6 à 8, caractérisée en ce qu'en retenue ou freinage, la haute pression se situe entre les moteurs hydrauliques fonctionnant en émetteurs et la pompe principale fonctionnant en réceptrice.

10. Utilisation selon l'une quelconque des revendications 6 à 9, caractérisée en ce qu'elle comporte également une pompe auxiliaire à débit fixe de gavage et de renouvellement (17), un limiteur de pression de gavage (18), un limiteur de haute pression (19) et un limiteur de purge et de renouvellement (20), ladite transmission étant complétée par un filtre d'aspiration (21) depuis un réservoir (22) et par un clapet de non retour (23), le renouvellement de l'huile se faisant par ce clapet.

11. Utilisation selon l'une quelconque des revendications 6 à 10, caractérisée en ce qu'un distributeur (28) commande le débit de la pompe principale (P) en utilisant la pression de gavage pour faire varier sa cylindrée.

12. Utilisation selon l'une quelconque des revendications 6 à 11, caractérisée en ce qu'elle comprend un diviseur de débit (29) divisant le débit haute pression de la pompe en autant de débits, de valeur identique, qu'il y a de roues et donc de moteurs.

13. Utilisation selon l'une quelconque des revendications 6 à 12, caractérisée en ce qu'elle comprend un distributeur (31) d'annulation de roue libre et un clapet (32) de roue libre, le distributeur (31) étant placé en position ouverte et le clapet (32) étant maintenu fermé par la haute pression pendant la propulsion, de sorte que dans le cas d'inversion de la haute pression et de la basse pression, le clapet (32) s'ouvre annulant la haute pression, les moteurs hydrauliques (M) tournant alors en roue libre.

14. Utilisation selon l'une quelconque des revendications 6 à 13, caractérisée en ce que la source de pression de pilotage est puisée sur la haute pression (HP) amenée à la pression de pilotage.

15. Utilisation selon la revendication 14, caractérisée en ce qu'elle comprend un sélecteur de circuit (33) recevant la haute pression et la dirigeant sur un distributeur (34) de commande de pilotage des moteurs hydrauliques (M).

16. Utilisation selon l'une quelconque des revendications 14 et 15, caractérisé en ce qu'un réducteur de pression (35) permet d'amener la haute pression (HP) à la pression de pilotage (Pp) et en ce qu'un limiteur de pression (36) maintient la pression de pilotage.

17. Utilisation selon l'une quelconque des revendications 14 à 16, caractérisée en ce qu'elle comprend, en outre, un distributeur (37) d'annulation de pression de pilotage, la mise en position de pilotage de ce distributeur (37) et du distributeur (34) de commande de pilotage étant obtenue par un courant électrique en provenance d'une dynamo (38) entraînée par le diviseur de débit (29) tournant à un régime donné (N1), la transmission étant en position d'anti-patinage avant d'atteindre ce régime (N1).

18. Utilisation selon l'une quelconque des revendications 6 à 17, caractérisée en ce que le diviseur de débit (29) qui annule les effets d'enrayage dans les périodes de freinage est également muni d'un limiteur de pression (39) afin de pallier les reports de puissance des roues entre elles.

19. Utilisation selon l'une quelconque des revendications 6 à 18, caractérisée en ce que la pompe principale (P) est munie d'au moins un limiteur de pression (19) garantissant la sécurité haute pression.

20. Utilisation selon l'une quelconque des revendications 6 à 19, caractérisée en ce qu'une baisse commandée de cylindrée de la pompe principale (P) du fait d'un freinage et d'un entraînement des moteurs hydrauliques (M) par l'inertie du véhicule, le fluide étant refoulé vers la pompe (P), permet la montée en pression dudit fluide de refoulement, occasionnant un couple de retenue aux moteurs hydrauliques et un entraînement de la pompe (P) et de l'émetteur de puissance (16) qui fonctionne alors en générateur de courant électrique, d'où un freinage avec récupération d'énergie.

21. Utilisation selon l'une quelconque des revendications 6 à 20, caractérisée en ce qu'un doseur de pression de frein (42) piloté hydrauliquement par un limiteur de pression de frein (43) permet, en phase de freinage sans récupération d'énergie, la montée en pression du fluide refoulé par les moteurs hydrauliques (M).

22. Utilisation selon l'une quelconque des revendications 20 et 21, caractérisée en ce que ledit doseur de freinage (42) permet un fonctionnement en freinage mixte en retenant une partie de la puissance de freinage afin de moduler la récupération d'énergie à la pompe principale (P).

23. Utilisation selon l'une quelconque des revendications 6 à 22, caractérisée en ce qu'un sélecteur de circuit (40) piloté hydrauliquement par la haute pression et donnant passage à la basse pression, permet le renouvellement d'huile en basse pression.

24. Utilisation selon l'une quelconque des revendications 6 à 23, caractérisée en ce qu'elle comprend un distributeur de commande de refroidissement (44) et un distributeur d'annulation de refroidissement (45), commandé par la pression de gavage, lequel permet, en position fermée, par suite de l'absence de pression de gavage d'éviter en phase de freinage, le groupe de puissance étant arrêté, l'épuisement du circuit hydraulique.

25. Utilisation selon l'une quelconque des revendications 6 à 24, caractérisée en ce qu'il est prévu un distributeur sélectif (46) piloté par les pressions (HP) d'au moins une paire de moteurs hydrauliques et traversé par la pression de pilotage (Pp), ceci afin de couper l'alimentation de pilotage du moteur hydraulique qui vient en chute de couple brutale par suite d'un manque d'adhérence ou par délestage, de sorte qu'un emballement dudit moteur par chute de cylindrée est évité.

**Patentansprüche**

1. Hydraulischer Motor mit Schiebern (1), die axial in in einem Rotor (3) angebrachten Aufnahmen (2) gegen eine Statorbodenfläche gleiten, mobilen Statorelementen, die im zurückgezogenen Zustand (6) jeweils eine mehr oder weniger tiefe, von der Position des Elementes in seiner Aufnahme (9) abhängige und höchstens in gleicher Höhe mit festen Abschnitten (5) der Statorbodenfläche befindliche Ausnehmung (8) aufweisen, wobei ein konstanter Steuerdruck (Pp) hinter diese mobilen Elemente (6) geleitet wird, wobei der so realisierte hydraulische Motor einen Motor variablen und sich selbst regulierenden Hubraums darstellt, wobei der Hubraum des Motors durch die Tiefe der Ausnehmung bestimmt wird, die aus dem Gegeneinanderwirken der beiden Kräfte auf beiden Seiten jedes mobilen Elementes (6) bestimmt wird, wobei eine Kraft (FP) vom konstanten Steuerdruck (Pp) stammt und eine Kraft (FA) von einem aktivem Druck (PA) stammt, der durch das Lastmoment verursacht wird, wobei die Kraft (FP) die Reduktion des Hubraums (q) des Motors bewirkt, während die Kraft (FA) die Vergrößerung dieses Hubraums bewirkt, so daß der hydraulische Motor durch Veränderung des Hubraums unter konstantem Druck arbeitet.

2. Hydraulischer Motor nach Anspruch 1, dadurch gekennzeichnet, daß Kreise hohen Drucks (HP) und niedrigen Drucks (BP) den Stator durch Kanäle (12), die jeweils in die statorseitigen Aufnahmen (9), die die mobilen Elemente (6) aufnehmen, verlängert sind, durch Tauchrohre (13), entlang denen die mobilen Elemente (6) gleiten, durchziehen, wobei der Steuerdruck durch einen Kanal (12A) hinter jedem mobilen Element (6) aufgebracht wird, wobei die Tauchrohre (13) die Kreisläufe (HP) und (BP) von diesem Steuerdruck (Pp) isolieren.

3. Hydraulischer Motor nach einem der Ansprüche 1 und 2, dadurch gekennzeichnet, daß der hydraulische Motor von der Art ist, die ein statorseitiges Mittelteil (5A) mit Bodenflächen (5, 11) einerseits und andererseits einer Symmetrieebene Y—Y aufweist, wobei dieses statorseitige Mittelteil mit einem Teil einer feststehenden Achse (5B) eine Einheit bildet, wobei der Rotor in der Form eines Käfigs un den Stator herum angebracht ist.

4. Hydraulischer Motor nach einem der Ansprüche 1 bis 3, dadurch gekennzeichnet, daß die mobilen Elemente (6) eine zentrale Fläche (11) zwischen den festen Abschnitten (5) aufweisen, wobei diese Abschnitte und die Flächen eben sind, mit einer möglichen Funktionsweise des Freilaufs, im Verlauf derren die starren Flächen (5) und die Ebenen (11) in gegenseitiger Ausrichtung sind.

5. Hydraulischer Motor nach einem der Ansprüche 3 und 4, dadurch gekennzeichnet, daß der äußere Rotor (3) des hydraulischen Motors an ein Rad (25) von rollendem Material angekuppelt ist, wobei die feststehende Achse (26) des Rades mit der festen Achse (5B) des Motors fest verbunden ist, welche von den Kanälen (12) der Drücke (HP) und (BP) und vom Kanal (12A) des Steuerdrucks (Pp) durchdrungen ist.

6. Anwendung des hydraulischen Motors nach einem der Ansprüche 1 bis 5 in einer hydrostatischen Leistungsübertragung, dadurch gekennzeichnet, daß sie außer diesem Motor (M), der mit einem angetriebenen Organ (15) fest verbunden ist, eine Pumpe (P) aufweist, die von einem Leistungsabgeber (16) mit konstanter Drehzahl angetrieben wird und die geforderte variable Förderung von hohen Druck (HP) liefert, die für die Rotation des hydraulischen Motors notwendig ist, wobei die Übertragung gleichermaßen eine Quelle für den konstanten Steuerdruck (Pp) aufweist, wobei dieser Druck (Pp) hinter die mobilen, statorseitigen Elemente (6) geleitet wird, so daß, wenn die maximale Förderung (Q maxi) der Pumpe bei konstantem Druck in Höhe der installierten Leistung erreicht ist, der hydraulische Motor seinen Anstieg auf die Leistung (Pw) mit der Geschwindigkeit (N) bei konstanter Förderung und konstantem Druck durch automatische Reduktion seines Hubraums (q) und seines Momentes (m) fortsetzt.

7. Anwendung nach Anspruch 6, dadurch gekennzeichnet, daß sie ein Fahrzeug ausrüstet und dadurch, daß sie Fahrtrichtungsverteiler (30) und ebensoviele hydraulische Motoren (M) aufweist, wie Räder (25) am dem betrachteten Fahrzeug vorhanden sind.

8. Anwendung nach Anspruch 6, dadurch gekennzeichnet, daß sie im geschlossenen Kreis mit niederdruckseitigen Erneuerungseinrichtungen vorgesehen ist, wobei die Richtung des hydraulischen Kreislaufs beim Antrieb oder beim Zurücklaufen immer gleich bleibt, wobei sich beim Antrieb der Hochdruck zwischen der Hauptpumpe (P) und den hydraulischen Motoren (M) befindet und dieser Hochdruck (HP) beim Freilauf abgeschaltet wird.

9. Anwendung nach einem der Ansprüche 6 bis 8, dadurch gekennzeichnet, daß sich der Hochdruck beim Zurücklaufen oder beim Bremsen zwischen den hydraulischen Motoren, die als Geber wirken und der Hauptpumpe, die als Aufnehmer wirkt, befindet.

10. Anwendung nach einem der Ansprüche 6 bis 9, dadurch gekennzeichnet, daß sie ebenfalls eine Hilfspumpe mit feststehender Förderung zur Druckerhöhung und zur Erneuerung (17), einen Druckbegrenzer für die Druckerhöhung (18), einen Hochdruckbegrenzer (19) und einen Begrenzer für Reinigung und Erneuerung (20) aufweist, wobei die Übertragung durch einen Ansaugfilter (21), einen Vorrat (22) und durch ein Rückschlagventil (23) vervollständigt wird, wobei die Erneuerung des Öls durch dieses Ventil erfolgt.

11. Anwendung nach einem der Ansprüche 6 bis 10, dadurch gekennzeichnet, daß ein Verteiler (28) die Förderung der Hauptpumpe (P) steuert, indem er den Druckerhöhungsdruck nutzt, um ihren Hubraum zu verändern.

12. Anwendung nach einem der Ansprüche 6 bis 11, dadurch gekennzeichnet, daß sie einen Versorgungsverteiler (29) aufweist, der die Hochdruckförderung der Pumpe in ebensoviele gleichwertige Versorgungen aufteilt wie Rädar und damit Morten vorhanden sind.

13. Anwendung nach einem der Ansprüche 6 bis 12, dadurch gekennzeichnet, daß sie einen Verteiler (31) zur Freilaufaufhebung und ein Freilaufventil (32) aufweist, wobei der Verteiler (31) in offener Stellung eingebaut ist und das Ventil (32) während des Antriebs durch den Hochdruck geschlossen gehalten wird, so daß im Fall der Unkehr des Hockdrucks und des Niederdrucks das Ventil (32) sich öffnet, um den Hochdruck abzubauen, wobei sich die hydraulischen Motoren (M) dann im Freilauf drehen.

14. Anwendung nach einem der Ansprüche 6 bis 13, dadurch gekennzeichnet, daß die Steuerdruckquelle vom zum Steuerdruck geführten Hochdruck (HP) abgezapft wird.

15. Anwendung nach Anspruch 14, dadurch gekennzeichnet, daß sie einen Kreislaufwähler (33) aufweist, der den Hochdruck aufnimmt und ihn auf einen Steuerverteiler (34) zur Steuerung der hydraulischen Motoren (M) leitet.

16. Anwendung nach einem der Ansprüche 14 und 15, dadurch gekennzeichnet, daß ein Druckreduzierer (35) erlaubt, den Hochdruck (HP) zum Steuerdruck (Pp) zu leiten und dadurch, daß ein Druckbegrenzer (36) den Steuerdruck aufrecht erhält.

17. Anwendung nach einem der Ansprüche 14 bis 16, dadurch gekennzeichnet, daß sie darüber hinaus einen Verteiler (37) zur Steuerdruckaufhebung aufweist, wobei die Einstellung in die Steuerposition dieses Verteilers (37) und des Verteilers (34) zur Betätigung der Steuerung durch einen elektrischen Strom aus einem Dynamo (38) erhalten wird, der durch den Versorgungsverteiler (29), der mit einer gegebenen Drehzahl (N1) dreht, angetrieben wird, wobei die Übertragung vor Erreichung dieser Drehzahl (N1) in Antischlupfstellung ist.

18. Anwendung nach einem der Ansprüche 6 bis 17, dadurch gekennzeichnet, daß der Versorgungsverteiler (29), der die Blockierwirkungen in den Bremsperioden zunichte macht, ebenfalls mit einem Druckbegrenzer (39) versehen ist, um die Leistungsübertragung zwischen de Rädern zu verringern.

19. Anwendung nach einem der Ansprüche 6 bis 18, dadurch gekennzeichnet, daß die Hauptpumpe (P) mit mindestens einem Druckbegrenzer (19) versehen ist, der die Hochdrucksicherheit gewährleistet.

20. Anwendung nach einem der Ansprüche 6 bis 19, dadurch gekennzeichnet, daß eine gesteuerte Hubraumabsenkung der Hauptpumpe (P) aufgrund einer Bremsung und eines Antriebs des hydraulischen Motors (M) durch die Trägheit des Fahrzeugs, wobei das Fluid zur Pumpe (P) zurückgedrängt wird, den Druckanstieg dieses Pump-Fluids erlaubt, was ein Rückhaltmoment auf die hydraulischen Motoren und einen Antrieb der Pump (P) und des Leistungsabgebers (16) verursacht, der somit als elektrischer Stromgenerator arbeitet, wodurch sich ein Bremsen mit Energierückgewinnung ergibt.

21. Anwendung nach einem der Ansprüche 6 bis 20, dadurch gekennzeichnet, daß ein Bremsdruckdosiergerät (42), das durch einen Bremsdruckbegrenzer (43) hydraulisch gesteuert ist, während einer Bremsphase ohne Energierückgewinnung den Druckanstieg des durch die hydraulischen Motoren (M) geförderten Fluides erlaubt.

22. Anwendung nach einem der Ansprüche 20 und 21, dadurch gekennzeichnet, daß das Bremsdosiergerät (42) eine gemischte Bremsweise erlaubt, indem ein Teil der Bremsleistung zurückgehalten wird, um die Energierückgewinnung in der Hauptpumpe (P) zu modulieren.

23. Anwendung nach einem der Ansprüche 6 bis 22, dadurch gekennzeichnet, daß ein Kreislaufwähler (40), der durch den Hochdruck hydraulisch gesteuert wird und Durchlaß dür den Niederdruck ermöglicht, die Erneuerung des Öls im Niederdruck erlaubt.

24. Anwendung nach einem der Ansprüche 6 bis 23, dadurch gekennzeichnet, daß sie einen Abkühlungs-Steuerverteiler (44) und einen Abkühlungs-Absperrverteiler (45) aufweist, der durch den Druckerhöhungsdruck gesteuert ist, welcher es erlaubt, in geschlossener Stellung infolge des Fehlens des Druckerhöhungsdrucks beim Bremsen, wobei die Leistungsgruppe angehalten ist, die Entleerung des hydraulischen Kreislaufs zu vermeiden.

25. Anwendung nach einem der Ansprüche 6 bis 24, dadurch gekennzeichnet, daß ein Auswahlverteiler (46) vorgesehen ist, der durch die Drücke (HP) von mindestens einem hydraulischen Motoren-Paar gesteuert ist und von Steuerdruck (Pp) durchquert wird, dies um die Steuer-Versorgung des hydraulischen Motors, der einen starken Drehmomentabfall infolge des Fehlens von Haftung oder durch Entlastung erfahren hat, abzuschneiden, so daß ein Hochlaufen dieses Motors durch Abfall des Hubraums vermieden ist.

**Claims**

1. A hydraulic motor comprising vanes (1) axially slidable in lodgings (2) formed in a rotor (3) against a stator bottom surface, back movable stator elements (6) each defining a recess (8) more or less depending on the position of the element in its lodging (9) and at most on a level with fixed areas (5) of said stator bottom surface, a constant piloting pressure (Pp) being supplied behind said movable elements (6), the so realized hydraulic motor constituting a self-regulated variable capacity motor, the motor capacity being determined by the depth of the recesses resulting from the opposition of two forces on either side of each movable element (6), a force (FP) resulting from said constant piloting pressure (Pp) and a force (FA) resulting from an active pressure (PA) produced by the resistive torque, the force (FP) having the effect of reducing the capacity (q) of the motor whereas the force (FA) has the effect of increasing such capacity so that the hydraulic motor is operable at constant pressure by varying the capacity.

2. A hydraulic motor according to claim 1, characterised in that high pressure (HP) and low pressure (BP) circuits pass through the stator by channels (12) therein each extended into the stator lodgings (9) receiving the movable elements (6) by plunging tubes (13) along which said movable elements (6) are slidable, the piloting pressure being fed in through a channel (12A) behind each movable element (6), the plunging tubes (13) isolating the circuits (HP) and (BP) from such piloting pressure (Pp).

3. A hydraulic motor according to any one of claims 1 and 2, characterized in that the hydraulic motor is of the type comprising a middle stator part (5A) with bottom surfaces (5, 11) on either side of a symmetrical plane Y—Y, such middle stator part being made integral with a portion of fixed shaft (5B), with the rotor being mounted as a cage about the stator.

4. A hydraulic motor according to any one of claims 1 to 3, characterized in that the movable elements (6) each comprise a central plate (11) between fixed areas (5), said areas and said plates being planar thereby permitting a free wheel operative step during which such fixed areas (5) and such plates (11) are on a level with one another.

5. A hydraulic motor according to any one of claims 3 and 4, characterized in that the external rotor (3) of the hydraulic motor is coupled to a wheel (25) from rolling stock, the fixed axle (26) of the wheel being made integral with the fixed shaft (5B) of the motor, through which the pressure (HP) and (BP) channels (12) and the piloting pressure (Pp) channel (12A) extend.

6. The utilization of the hydraulic motor according to anyone of claims 1 to 5, in a hydrostatic power transmission, characterized in that it comprises, in addition to said motor (M) fastened to a driven member (15), a pump (P) driven at constant rate through a power transmitter (16) and supplying a controlled variable high pressure (HP) flow rate required for rotation of the hydraulic motor, said transmission also comprising a constant piloting pressure (Pp) source, such pressure (Pp) being supplied behind the movable stator elements (6) such that the maximum flow rate ($Q$ maxi) of said pump at constant pressure at the level of the power installed being reached, the hydraulic motor continuously increases its speed (N) at constant power (Pw), flow rate and pressure, through automatic reduction of its capacity (q) and its torque ($m$).

7. The utilization according to claim 6, characterized in that it is applied to a vehicle and in that it comprises running direction manifolds (30) and as many hydraulic motors (M) as there are wheels (25) on the vehicle considered.

8. The utilization according to claim 6, characterized in that it is in closed circuit with recovery device on the low pressure side, the direction in the hydraulic circuit being always the same both under propulsion or hold back conditions, the high pressure (HP) in propulsion lying between the main pump (P) and the hydraulic motors (M) and such high pressure (HP) being zero in free wheeling.

9. The utilization according to anyone of claims 6 to 8, characterized in that under hold back or braking conditions the high pressure lies between the hydraulic motors operated as transmitters and the main pump operated as receiver.

10. The utilization according to any one of claims 6 to 9, characterized in that it also comprises an auxiliary pump with fixed boost and renewal flow rate (17), a boost pressure limiter (18), a high pressure limiter (19) and a discharge and renewal limiter (20), said transmission being completed by an aspiration filter (21) from a tank (22) and a check valve (23), renewal of oil being achieved by such valve.

11. The utilization according to any one of claims 6 to 10, characterized in that a manifold (28) controls the flow rate in the main pump (P) by using the boost pressure for varying its capacity.

12. The utilization according to any one of claims 6 to 11, characterized in that it comprises a flow rate divider (29) to divide the high pressure flow rate of the pump into as many flow rates of identical value as there are wheels and therefore motors.

13. The utilization according to any one of claims 6 to 12, characterized in that it comprises a free wheeling stop manifold (31) and a free wheeling valve (32), the manifold (31) being brought to the open position and the valve (32) being held closed by the high pressure during propulsion, such that in case of high pressure and low pressure reversal, the valve (32) opens thereby interrupting the high pressure, the hydraulic motors (M) then rotating in free wheeling.

14. The utilization according to any one of claims 6 to 13 characterized in that the piloting pressure source is derived from the high pressure (HP) brought to the piloting pressure.

15. The utilization according to claim 14, characterized in that it comprises a circuit selector (33) receiving the high pressure and directing it to a piloting control manifold (34) for the hydraulic motors (M).

16. The utilization according to any one of claims 14 and 15, characterized in that a pressure reducer (35) is adapted to bring the high pressure (HP) to the piloting pressure (Pp) and in that a pressure limiter (36) maintains the piloting pressure.

17. The utilization according to any one of claims 14 to 16, characterized in that it also comprises a piloting pressure stop manifold (37), such manifold (37) and the piloting control manifold (34) being brought to the piloting position by electric current from an electric generator (38) driven by the flow rate divider (29) rotating at a given rate (N1), the transmission being in the antiskid position before reaching such rate (N1).

18. The utilization according to any one of claims 6 to 17, characterized in that the flow rate divider (29) which cancels the jamming effects in the braking periods is also provided with a pressure limiter (39) for coping with any power transfer of the wheels to one another.

19. The utilization according to any one of claims 6 to 18, characterized in that the main pump (P) is provided with at least one pressure limiter (19) to ensure high pressure safety.

20. The utilization according to any one of claims 6 to 19, characterized in that a controlled decrease in the capacity of the main pump (P) due to braking or driving of the hydraulic motors (M) by the inertia of the vehicle, with the fluid being fed back to the pump (P), permits increase of pressure in said supplied fluid thereby producing a hold back torque at the hydraulic motors and driving of the pump (P) and the power transmitter (16) which is then operated as an electric current generator, thereby resulting in energy recovery braking.

21. The utilization according to any one of claims 6 to 20, characterized in that a brake pressure dosage means (42) hydraulically piloted by a brake pressure limiter (43) permits increase in pressure of fluid supplied back by the hydraulic motors (M) in a braking phase without energy recovery.

22. The utilization according to any one of claims 20 and 21, characterized in that said braking dosage means (42) permits mixed braking operation by holding back part of the braking power to modulate the energy recovery at the main pump (P).

23. The utilization according to any one of claims 6 to 22, characterized in that a circuit selector (40) hydraulically piloted by the high pressure and letting the low pressure out permits renewal of oil in low pressure.

24. The utilization according to any one of claims 6 to 23, characterized in that it comprises a cooling control manifold (44) and a cooling stop manifold (45) controlled by the boost pressure which latter permits in the closed position and due to the absence of boost pressure to prevent depletion of the hydraulic circuit in the braking phase with the power group being stopped.

25. The utilization according to any one of claims 6 to 24, characterized in that there is provided a selective manifold (46) piloted by the pressures (HP) of at least one pair of hydraulic motors and through which the piloting pressure (Pp) flows, in order to switch off the piloting supply to the hydraulic motor which comes to an abrupt torque decrease due to lack of adherence or unloading thereby preventing motor racing by capacity fall.

FIG.1

FIG.2

FIG. 3

FIG.11

FIG.5

FIG.4

3

FIG.6

HAUTE PRESSION
BASSE PRESSION
PRESSION PILOTAGE
DRAINAGE

0 053 544

# FIG.7

| | | | HAUTE PRESSION |
|---|---|---|---|
| | | | BASSE PRESSION |
| | | | PRESSION PILOTAGE |
| | | | DRAINAGE |

0 053 544

FIG.8

HAUTE PRESSION
BASSE PRESSION
PRESSION PILOTAGE
DRAINAGE

FIG.9

HAUTE PRESSION
BASSE PRESSION
PRESSION PILOTAGE
DRAINAGE

0 053 544

FIG.10

HAUTE PRESSION
BASSE PRESSION
PRESSION PILOTAGE
DRAINAGE

0 053 544